# EUROPÄISCHE PATENTSCHRIFT

(11) **EP 2 869 010 B1**
(45) Veröffentlichungstag und Bekanntmachung des Hinweises auf die Patenterteilung: **19.09.2018**
(21) Anmeldenummer: 14190835.0
(22) Anmeldetag: 29.10.2014
(51) Int. Cl.: F26B 5/04, B29C 67/24, F26B 25/06

(54) **VERFAHREN ZUR HERSTELLUNG EINES GEHÄUSES FUR EINEN VAKUUM-TROCKNER MIT EINEM DURCHGANG MIT EINER EINGANGS- UND EINER AUSGANGSÖFFNUNG**
METHOD FOR THE PRODUCTION OF A HOUSING FOR A VACUUM DRIER HAVING A PASSAGEWAY WITH AN ENTRY AND AN EXIT OPENING
MÉTHODE POUR LA PRODUCTION D'UN BOÎTIER POUR UN SÉCHOIR À VIDE ÉQUIPÉ D'UN PASSAGE PRÉSENTANT UN ORIFICE D'ENTRÉE ET DE SORTIE

(30) Priorität: 31.10.2013 DE 102013112034
(43) Veröffentlichungstag der Anmeldung: 06.05.2015
(73) Patentinhaber: Piller Entgrattechnik GmbH, 71254 Ditzingen (DE)
(72) Erfinder: Piller, Thomas, 71254 Ditzingen (DE)
(74) Vertreter: Fleck, Hermann-Josef

(56) Entgegenhaltungen:
- EP-A2- 2 439 474
- DE-A1- 2 505 968
- DE-A1-102009 020 368
- DE-A1-102011 103 021
- US-A1- 2003 071 029

## Beschreibung

Die Erfindung betrifft ein Verfahren zur Herstellung eines Gehäuses für einen Vakuum-Trockner mit einem Durchgang mit einer Eingangs- und einer Ausgangsöffnung nach dem Oberbegriff des Anspruchs 1.

Wie die DE 844 268 zeigt, ist ein Gehäuse für einen Vakuum-Trockner bekannt, bei dem das Gehäuse eine einen Durchgang bildende Trommel aufweist, das in zwei schalenförmigen Gussteilen angeordnet ist. Diese schalenförmigen Gussteile sind aufklappbar miteinander verbunden, wobei die Klappachse in einer durch die Trommel geführten Hohlwelle angeordnet ist. Ein derartiges Gehäuse für einen Vakuum-Trockner erfordert einen komplizierten Aufbau aus mehreren Bauteilen, ist sehr teuer in der Herstellung und bedingt eine aufwändige Handhabung insbesondere bei der Einformung des Gehäuses mittels der Gussform.

Es ist auch bekannt, einen Vakuum-Trockner so zu gestalten, dass einem Gehäuse mit einem Durchgang mit einer Eingangs- und Ausgangsöffnung Türplatten zum Verschließen und Wiederöffnen des Durchgangs zugeordnet sind, wie die EP 2 439 474 A2 zeigt. Zudem ist dem Vakuum-Trockner eine Vakuumpumpe und eine Heizeinrichtung beigefügt, die über Verbindungsleitungen und Durchbrüche in einer Wand des Gehäuses mit dem Durchgang des Gehäuses in Verbindung stehen. Die Verbindungsleitungen werden nach der Entformung des Gehäuses aus Gussform über die Durchbrüche mit dem Durchgang des Gehäuses verbunden.

Wie die DE 10 2011 103 021 A1 zeigt, kann der Trommel des Vakuum-Trockners auf der Ausgangsseite ein zustellbarer Wärmeaustauscher und auf der Rückseite eine Abluftsammelkammer und eine Gebläseeinheit zugeordnet sein.

Den aus DE 2011 103 021 A1 bekannte Trommeltrockner, der zur Trocknung von organischen Gütern verwendet wird, weist eine Trommel auf, die auf der Eingangs-und Ausgangsseite fest verschlossen ist.

Die DE 25 05 968 A1 zeigt eine Destillationsvorrichtung mit einer Wärmezufuhrkammer, mehreren in Reihe hintereinander angeordneten Verdampfungskammern vom Unterdrucktyp, welche in einem gemeinsamen Gehäuse angeordnet und durch dieses Gehäuse und Trennwände begrenzt sind, einem Bündel von Kondensationsröhren, von denen wenigstens einige sich durch alle Verdampfungskammern erstrecken, wobei kalter zu destillierender Stoff durch die Röhren fließt, einem Becken in jeder Verdampfungskammer, wobei erhitzter zu destillierender Stoff durch diese Becken fließt, und einem Trog unter den Röhren in jeder Verdampfungskammer zur Aufnahme von Destillat. Dabei ist erfindungsgemäß bei der Destilliervorrichtung vorgesehen, dass sich die Kondensationsröhren auch durch die Erhitzungskammer erstrecken und aus Kunststoff bestehen und dass die Erhitzungskammer in dem Gehäuse angeordnet und durch das Gehäuse und wenigstens eine Trennwand begrenzt ist. Über das Herstellungsverfahren der Destilliervorrichtung sagt diese Druckschrift nicht aus.

Es ist auch eine Vakuumkammer bekannt, die mit einem Traggriff versehen ist und einen Anschluss für eine Vakuumquelle und eine Heizvorrichtung aufweist. An einem ersten Standort kann die Vakuumkammer mit der Vakuumquelle und der Heizvorrichtung verbunden werden. Nach der Trennung dieser Verbindungen kann die Vakuumkammer unter Aufrechterhaltung des Vakuums an einen zweiten Standort transportiert werden, z. B. wie einen Glüh- oder einen Reinigungsraum, wie die US 2003/0071029 A1 zeigt.

Die DE 10 2009 020 368 A1 zeigt ein Monoblockgehäuse aus Mineralguss, das Verbindungsmittel aus Metall aufweist, die im Mineralguss eingegossen sind. Zur Erhöhung der Haltbarkeit und Festigkeit des Monoblocks ist mindestens eine vollständige Komponente im Mineralguss eingegossen. Die Komponenten können z. B. Füße oder Anschlussringe in Form von Eingießungen sein.

Es ist Aufgabe der Erfindung, ein Verfahren zum Herstellen einer Vakuumkammer der eingangs erwähnten Art zu entwickeln, das unter Einsatz von kostengünstigem Material einen möglichst umfassenden Betrieb ohne weitere Bauteile zulässt, wobei die Handhabung bei der Entnahme aus der Gussform einfach ist und die gesamten Anschlussmöglichkeiten für den Betrieb der Vakuumkammer gegeben sind.

Die gestellte Aufgabe wird durch die Merkmale des Anspruchs 1 gelöst.

Dies wird dadurch erreicht, dass das Gehäuse aus Mineralguss, d. h. aus Kunststoff und Mineralien, gefertigt wird, wobei der Durchgang durch ein erstes Formteil einer Gussform und die Außenflächen des Gehäuses durch zwei äußere Formteile der Gussform bestimmt werden, wobei die äußeren Formteile senkrecht zur Achse des Durchgangs des Gehäuses verstellbar sind und wobei in einer Wand des Gehäuses Durchbrüche mit Befestigungsbohrungen für die Anschlussleitungen der Vakuumpumpe und der Heizeinrichtung ausgebildet werden, dass zumindest das Gehäuse im Bereich der Eingangsöffnung des Durchgangs mit einem umlaufenden Flansch versehen wird, wobei an zwei gegenüberliegenden Außenseiten des Flansches Befestigungsaufnahmen für Führungselemente einer verstellbaren Türplatte angeformt werden, dass die Ausgangsöffnung des Durchgangs mit einer fest angeformten Türplatte verschlossen wird, wobei die senkrechten Außenseiten der Flansche, die Stirnseiten der Flansche und die Deckwand und der Boden des Gehäuses mit eingegossenen Befestigungsaufnahmen oder Gewindehülsen versehen werden, die durch Bolzen der äußeren Formteile der Gussform oder durch Schrauben, die in die Befestigungsaufnahmen oder Gewindehülsen der äußeren Formteile eingeschraubt werden, während des Gießvorgangs gehalten werden.

Mit diesem Verfahren kann das Gehäuse beim Gießvorgang so hergestellt werden, dass nach dem Entnehmen des gegossenen Gehäuses aus der Gussform alle Möglichkeiten für den Zusammenbau der Vakuumkammer gegeben sind.

Vorteilhafte Weiterbildungen des Verfahrens sind den Unteransprüchen zu entnehmen.

Der Durchgang wird vorzugsweise mit rechteckigem Querschnitt mit konvexen Eckkanten versehen, wodurch ein Aufstellen und Befestigen der Vakuumpumpe und der Heizeinrichtung auf der Deckwand des Gehäuses erleichtert wird.

Der Durchgang kann im Bereich des Bodens mit anschließenden Ausbuchtungen verbreitert werden, um den Anbau von Transporteinrichtungen für die zu trocknenden Güter zu ermöglichen und zu erleichtern.

Diese Befestigungsaufnahmen oder Gewindebuchse erleichtern und verbessern den Aufbau des Trockners. Die Schrauben in den äußeren Formteilen der Gussform sind nach dem Gießvorgang vor dem Entformen des Gehäuses aus der Gussform aus den äußeren Formteilen entfernbar, d. h. herausschraubbar.

Auf den Stirnseiten der Flansche werden mittels der Befestigungsaufnahmen oder Gewindebuchsen rahmenartige Stahlplatten befestigt, die im Bereich der Stirnseite einen Abrieb der Flansche beim Schließen und Wiederöffnen der Türplatten des Durchgangs verhindern.

Das Gehäuse selbst wird über die Befestigungsaufnahmen oder Gewindebuchsen des Bodens des Gehäuses mit einem Gestell verbunden.

Die Vakuumpumpe und die Heizeinrichtung werden über die Befestigungsaufnahmen oder Gewindebuchsen der Deckwand des Gehäuses mit dem Gehäuse verbunden.

Die Erfindung wird anhand eines Ausführungsbeispiels mit der beiliegenden Zeichnung näher erläutert. Es zeigt:

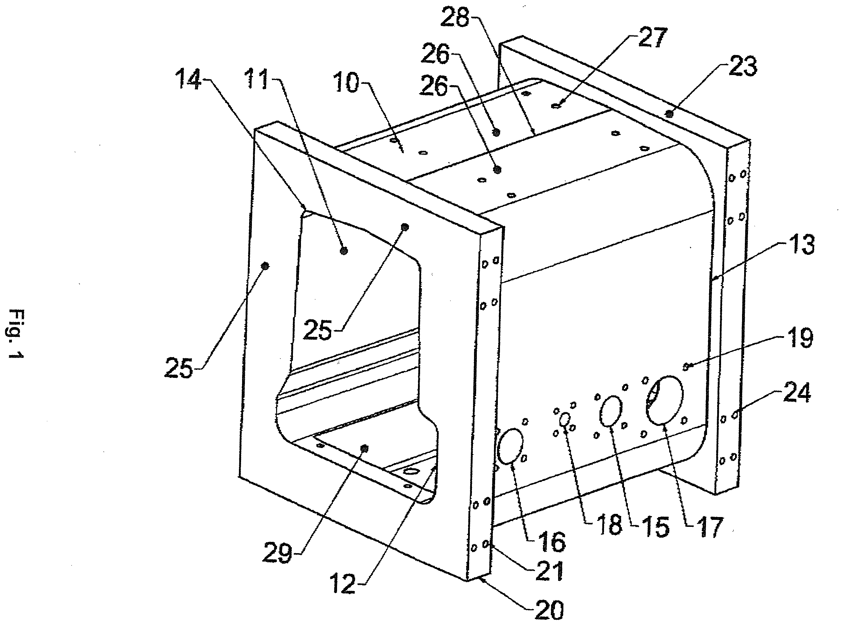

- Fig. 1: ein Gehäuse für einen Vakuum-Trockner, das in einer Gussform mit drei Formteilen in einem Gießvorgang vollautomatisch herstellbar ist.

Das Gehäuse 10 nach Fig. 1 ist aus Mineralguss, d.h. aus Kunstharz und Mineralien, hergestellt und weist alle Merkmale auf, die für einen Aufbau eines Vakuum-Trockners erforderlich sind.

Das Gehäuse 10 weist einen im Querschnitt rechteckigen Durchgang 11 mit einer Eingangs- und Ausgangsöffnung auf. Dabei weist der Durchgang 11 konvex gerundete Eckkanten 14 auf, die sich im Gehäuse 10 konkav abbilden.

Im Bereich der Eingangs- und Ausgangsöffnung des Durchgangs 11 ist das Gehäuse 10 mit angeformten Flanschen 20 und 23 versehen. Der Durchgang 11 kann im Bereich des Bodens 29 mit anschließenden Ausbauchungen 12 versehen sein und in diesem Bereich den Durchgang 11 verbreitern.

Die Flansche 20 und 23 können an den beiden senkrechten Außenseiten mit Befestigungsaufnahmen oder Gewindebuchsen 21 versehen sein. Auf diese Weise lassen sich Führungselemente an den Flanschen 20 und 23 befestigen, die ein Verstellen von Türplatten zum Verschließen und Wiederöffnen der Eingangs- und Ausgangsöffnung des Durchgangs 11 erlauben.

Der Vakuum-Trockner kann daher im Durchlaufbereich oder im einseitigen Ein-/Ausgangsbetrieb betrieben werden. Beim einseitigem Ein-/Ausgangsbetrieb kann die Ausgangsöffnung des Durchgangs 11 auch mit einer festen Platte verschlossen sein, die an dem Gehäuse 10 fest angeformt ist.

Die Gussform für das Gehäuse 10 besteht aus einem ersten Formteil, das den Durchgang 11 festlegt und aus diesem herausgezogen werden kann. Die äußeren Flächen des Gehäuses 10 sind durch zwei äußere Formteile festgelegt, die senkrecht zur Achse des Durchgangs 11 verstellbar sind.

Dabei kann das der Wand 13 des Gehäuses 10 zugekehrte äußere Formteil auch Durchbrüche 15, 16, 17 und 18 mit Befestigungsbohrungen 19 für die Anschlussleitungen der Vakuumpumpe und der Heizeinrichtung ausbilden und zwar durch am zugekehrten äußeren Formteil angeformte Bolzen, die sich auf dem ersten Formteil in dem Durchgang 11 abstützen.

Das Gehäuse 10 ist im Bereich der Eingangs- und der Ausgangsöffnung des Durchgangs 11 mit einem umlaufenden Flansch 20 und 23 versehen, wobei an zwei gegenüberliegenden senkrechten Außenseiten der Flansch 20 und 23 Befestigungsaufnahmen oder Gewindebuchsen 21 zum Befestigen von Führungselementen für Türplatten vorgesehen sind.

Der Durchgang 11 weist rechteckigen Querschnitt mit konvexen Eckkanten auf, die sich im Gehäuse 10 als konkave Kanten 14 ausbilden.

Der Durchgang 11 ist im Anschluss an den Boden 29 mit Ausbauchungen 12 der Seitenwände verbreitert, was den Anschluss einer Transporteinrichtung an die Stirnseite des Gehäuses 10 erleichtert.

Bei einem Eingangs-/Ausgangsbetrieb des Vakuumtrockners ist die Ausgangsöffnung des Durchgangs 11 mit einer einstückig angeformten Türplatte verschlossen.

Die senkrechten Außenseiten der Flansche 20 und 23, die Stirnseiten der Flansche 20 und 23 und die Deckwand 26 und der Boden 29 des Gehäuses 10 sind mit eingegossenen Befestigungsaufnahmen oder Gewindebuchsen 21, 24; 25; 27 versehen, die durch Bolzen der äußeren Formteile der Gussform oder durch Schrauben, die in den äußeren Formteilen der Gussform gehalten sind, gebildet sind.

Die Schrauben in den äußeren Formteilen der Gussform sind nach dem Gießvorgang vor dem Entfernen des Gehäuses aus der Gussform aus den äußeren Formteilen entfernbar, d.h. aus den eingegossenen Gewindebuchsen herausschraubbar.

Auf den Stirnseiten der Flansche 20 und 23 sind mittels der Befestigungsaufnahmen oder Gewindebuchsen 25 rahmenartige Stahlplatten befestigbar, die im Bereich der Stirnseiten des Gehäuses 10 einen Abrieb der Flansche 20 und 23 beim Schließen und Wiederöffnen der Türplatten des Durchgangs 11 verhindern.

Das Gehäuse 10 ist über die Befestigungsaufnahmen der Gewindebuchsen im Boden 29 des Gehäuses 10 mit einem Gestell verbindbar.

Die Vakuumpumpe und die Heizeinrichtung sind über die Befestigungsaufnahmen oder Gewindebuchsen 27 in der Deckwand 26 des Gehäuses 10 mit dem Gehäuse 10 verbindbar. Dabei ist in der Deckwand 26 noch die Trennlinie 28 der beiden äußeren Formteile der Gussform erkennbar.

Das Gehäuse 10 ist in dieser Ausgestaltung aus kostengünstigem Material vollautomatisch herstellbar und weist alle Merkmale für den Aufbau eines Vakuum-Trockners auf.

## Patentansprüche

1. Verfahren zur Herstellung eines Gehäuses (10) für einen Vakuum-Trockner mit einem Durchgang (11) mit einer Eingangs- und einer Ausgangsöffnung, wobei der Eingangs- und der Ausgangsöffnung Türplatten zum Verschließen und Öffnen zugeordnet werden und der Vakuum-Trockner mit einer Vakuumpumpe und einer Heizeinrichtung versehen wird, die über Anschlussleitungen mit dem Durchgang (11) des Gehäuses (10) verbunden werden,
**dadurch gekennzeichnet,**
**dass** das Gehäuse (10) aus Mineralguss, d. h. aus Kunstharz und Mineralien, gefertigt wird, wobei der Durchgang (11) auch ein erstes Formteil einer Gussform und die Außenflächen des Gehäuses (10) durch zwei äußere Formteile der Gussform bestimmt werden, wobei die äußeren Formteile senkrecht zur Achse des Durchgangs (11) des Gehäuses (10) verstellbar sind und wobei in einer Wand (13) des Gehäuses (10) Durchbrüche (15, 16, 17 und 18) mit Befestigungsbohrungen (19) für die Anschlussleitungen der Vakuumpumpe und der Heizeinrichtung ausgebildet werden,
**dass** das Gehäuse zumindest im Bereich der Eingangsöffnung des Durchgangs (11) mit einem umlaufenden Flansch (20 und 23) versehen wird, wobei an zwei gegenüber liegenden Außenseiten der Flansche (20, 23) Befestigungsaufnahmen (21) für Führungselemente einer verstellbaren Türplatte angeformt werden, und
**dass** die Ausgangsöffnung des Durchgangs (11) mit einer fest angeformten Türplatte verschlossen wird, wobei die senkrechten Außenseiten der Flansche (20, 23), die Stirnseiten der Flansche (20, 23) und die Deckwand (26) und der Boden (29) des Gehäuses (10) mit eingegossenen Befestigungsaufnahmen oder Gewindehülsen (21, 24 bzw. 25 bzw. 27) versehen werden, die durch Bolzen der äußeren Formteile der Gussform oder durch Schrauben, die in die äußeren Formteile der Gussform eingeschraubt werden, während des Gießvorgangs gehalten werden.

2. Verfahren nach Anspruch 1,
**dadurch gekennzeichnet,**
**dass** der Durchgang (11) des Gehäuses (10) mit rechteckförmigem Querschnitt mit konvexen Eckkanten ausgelegt wird.

3. Verfahren nach Anspruch 1 und 2,
**dadurch gekennzeichnet,**
**dass** der Durchgang (11) im Bereich des Bodens (25) mit ausbuchtenden Ausbuchtungen (12) versehen wird.

4. Verfahren nach Anspruch 1 bis 3,
**dadurch gekennzeichnet,**
**dass** die Schrauben in den äußeren Formteilen der Gussform nach dem Gießvorgang vor dem Entformen des Gehäuses (10) aus den äußeren Formteilen, d. h. aus den eingegossenen Gewindebolzen (21, 24, 26, 27), ausgeschraubt werden.

5. Verfahren nach Anspruch 1 bis 4,
**dadurch gekennzeichnet,**
**dass** rahmenartige Stahlplatten mittels Befestigungsaufnahmen oder Gewindebolzen (25) auf den Stirnseiten der Flansche (20, 23) befestigt werden, die im Bereich der Stirnseiten einen Abrieb der Flansche (20, 23) beim Schließen oder Wiederöffnen der Türplatte des Durchgangs (11) verhindern.

6. Verfahren nach Anspruch 1 bis 5,
**dadurch gekennzeichnet,**
**dass** das Gehäuse (10) über Gewindeaufnahmen (29) im Boden des Gehäuses (10) mit einem Gestell verbunden wird.

7. Verfahren nach Anspruch 1 bis 6,
**dadurch gekennzeichnet,**
**dass** die Vakuumpumpe und die Heizeinrichtung über Befestigungsaufnahmen der Gewindebuchsen (25) in der Deckwand (27) des Gehäuses (10) mit dem Gehäuse (10) verbunden werden.

## Claims

1. Method for producing a housing (10) for a vacuum drier, which comprises a passage (11) that has an inlet opening and an outlet opening, the inlet opening and the outlet opening being associated with door panels for closing and opening and the vacuum drier being provided with a vacuum pump and a heating device which is connected to the passage (11) in the housing (10) via connecting lines,
**characterized in that**
the housing (10) is manufactured from cast mineral, i.e. from synthetic resin and minerals, the passage (11), also a first molded part of a casting mold, and the outer faces of the housing (10) being determined by two outer molded parts of the casting mold, it being possible to adjust the outer molded parts so as to be perpendicular with respect to the axis of the passage (11) in the housing (10) and through-holes (15, 16, 17 and 18) being formed in a wall (13) of the housing (10) which have securing holes (19) for the connecting lines of the vacuum pump and the heating device,
**in that** the housing is provided with a peripheral flange (20 and 23) at least in the region of the inlet opening of the passage (11), securing recesses (21) being integrally formed on two opposite outer faces of the flanges (20, 23) for guiding elements of an adjustable door panel, and
**in that** the outlet opening of the passage (11) is closed off by a securely integrally formed door panel, the perpendicular outer faces of the flanges (20, 23), the end faces of the flanges (20, 23) and the top wall (26) and the base (29) of the housing (10) being provided with cast-in securing recesses or threaded sleeves (21, 24 or 25 or 27) which are supported during the casting process by means of bolts of the outer molded parts of the casting mold or by means of screws that are screwed into the outer molded parts of the casting mold.

2. Method according to claim 1,
**characterized in that**
the passage (11) in the housing (10) has a rectangular cross section having convex corner edges.

3. Method according to claims 1 and 2,
**characterized in that** the passage (11) is provided with bulging indentations (12) in the region of the base (25).

4. Method according to claims 1 to 3,
**characterized in that**
the screws in the outer molded parts of the casting mold are screwed out of the outer molded parts, i.e. out of the cast-in stud bolts (21, 24, 26, 27), after the casting process and before the housing (10) is removed from the mold.

5. Method according to claims 1 to 4,
**characterized in that**
frame-like steel panels are secured to the end faces of the flanges (20, 23) by means of securing recesses or stud bolts (25), which panels prevent abrasion of the flanges (20, 23) in the region of the end faces when the door panel of the passage (11) is opened or closed.

6. Method according to claims 1 to 5,
**characterized in that**
the housing (10) is connected to a frame by means of threaded recesses (29) in the base of the housing (10).

7. Method according to claims 1 to 6,
**characterized in that**
the vacuum pump and the heating device are connected to the housing (10) by means of securing recesses of the threaded bushes (25) in the top wall (27) of the housing (10).

## Revendications

1. Procédé de fabrication d'un boîtier (10), destiné à un sécheur sous vide, comprenant un passage (11) pourvu d'un orifice d'entrée et d'un orifice de sortie, l'orifice d'entrée et l'orifice de sortie étant associés à des plaques formant porte destinées à la fermeture et l'ouverture, et le sécheur sous vide étant pourvu d'une pompe à vide et d'un dispositif de chauffage qui sont reliés au passage (11) du boîtier (10) par des conduits de raccordement,
**caractérisé en ce que**
le boîtier (10) est fabriqué à partir d'une matière de moulage minérale, c'est-à-dire à partir d'une résine synthétique et de minéraux, le passage (11) étant défini par une première pièce d'un moule et les surfaces extérieures du boîtier (10) étant définis par deux pièces extérieures du moule, les pièces extérieures étant réglables perpendiculairement à l'axe du passage (11) du boîtier (10) et des percées (15, 16, 17 et 18) comprenant des trous de fixation (19) destinés aux conduits de raccordement de la pompe à vide et du dispositif de chauffage étant formées dans une paroi (13) du boîtier (10),
le boîtier est pourvu d'une bride circonférentielle (20 et 23) au moins dans la zone de l'ouverture d'entrée du passage (11), des logements de fixation (21) destinés à des éléments de guidage d'une plaque formant porte réglable étant formées sur deux côtés extérieurs opposés des brides (20, 23), et
l'ouverture de sortie du passage (11) est fermée par une plaque formant porte moulée solidairement, les côtés extérieurs perpendiculaires des brides (20, 23), les faces d'extrémité des brides (20, 23) et la paroi supérieure (26) et le fond (29) du boîtier (10) étant pourvus de logements de fixation ou de douilles filetées (21, 24 ou 25 ou 27) réalisés par moulage qui sont maintenus pendant le processus de moulage par des boulons des pièces extérieures du moule ou par des vis qui sont vissées dans les pièces extérieures du moule.

2. Procédé selon la revendication 1,
**caractérisé en ce que**
le passage (11) du boîtier (10) est conçu avec une section transversale rectangulaire présentant des bords d'angle convexes.

3. Procédé selon les revendications 1 et 2,
**caractérisé en ce que**
le passage (11) est pourvu de renflements bombés (12) dans la région du fond (29).

4. Procédé selon les revendications 1 à 3,
**caractérisé en ce que**
les vis sont dévissées dans les pièces extérieures du moule après le processus de moulage avant de démouler le boîtier (10) des pièces extérieures du moule, c'est-à-dire des boulons filetés (21, 24, 26, 27) réalisés par moulage.

5. Procédé selon les revendications 1 à 4,
**caractérisé en ce que**
des plaques en acier en forme de cadre sont fixées au moyen de logements de fixation ou de boulons filetés (25) sur les côtés d'extrémité des brides (20, 23) qui empêchent une usure des brides (20, 23) dans la région des côtés d'extrémité lors de la fermeture ou de la réouverture de la plaque formant porte du passage (11).

6. Procédé selon les revendications 1 à 5,
**caractérisé en ce que**
le boîtier (10) est relié à un bâti par le biais de logements filetés ménagés dans le fond (29) du boîtier (10).

7. Procédé selon les revendications 1 à 6,
**caractérisé en ce que**
la pompe à vide et le dispositif de chauffage sont reliés au boîtier (10) par le biais de logements de fixation des douilles filetées (25) ménagés dans la paroi supérieure (26) du boîtier (10).
